Europäisches Patentamt

European Patent Office

Office européen des brevets

(19)

(11) Publication number: **0 258 057**
**A2**

(12) # EUROPEAN PATENT APPLICATION

(21) Application number: **87307597.2**

(22) Date of filing: **27.08.87**

(51) Int. Cl.⁴: **B 01 F 3/04**

(30) Priority: **28.08.86 IL 79877**

(43) Date of publication of application:
**02.03.88 Bulletin 88/09**

(84) Designated Contracting States:
**AT BE CH DE ES FR GB GR IT LI LU NL SE**

(71) Applicant: **Almog, Ehud**
**METAL WORKS 6 Golie Kenia Street**
**Tel Aviv (IL)**

**David, Ramat**
**Kibbutz Ramat David**
**D.N. Jezreel Valley 30093 (IL)**

(72) Inventor: **Almog, Ehud**
**6 Golie Kenia Street**
**Tel Aviv (IL)**

(74) Representative: **Kosmin, Gerald Emmanuel et al**
**HASELTINE, LAKE & CO. Hazlitt House 28 Southampton**
**Buildings Chancery Lane**
**London, WC2A 1AT (GB)**

(54) **Pressurized CO2 gas cartridges for making carbonated beverage.**

(57) For domestic use in the prepartion of carbonated beverages there is provided a cartridge, adapted to be inserted into a container filled with the beverage to be carbonated, and the container is closed. The cartridge has a seal, such as a unidirectional valve body, which is at least partly made of a maceratable material in a compact state, such as gelatine, starch, sugar, felt, paper, and the like substances which dissolve, disintegrate, or otherwise react with liquid to become soft when soaked. The cartridge is inserted into the container so that the seal becomes wetted, and after a while the material softens, ceases to function as a sealing element, and allows the release of the gas from the cartridge to admix with the beverage within the container.

EP 0 258 057 A2

## Description

PRESSURIZED CO2 GAS CARTRIDGES FOR MAKING CARBONATED BEVERAGE

The present invention relates to the preparation of carbonated beverages, and more particularly to the self-preparation -- in contradistinction to factory-bottling -- of carbonated beverages such as soda water, or any flavored beverage containing carbon dioxide. Self- or domestic-preparation of carbonated beverages was developed long ago, using small, one-time, refillable or disposable, bottle-shaped cartridges containing CO2 gas under a pressure of about 40 to 60 atmospheres. Each cartridge is provided with a valve of simple design, e.g. comprising a button with a stem projecting from the cap of the cartridge, or a metal foil diaphragm sealing the cartridge.

In use, there is provided an appliance comprised of a container which is to be filled with water up to a certain level, and a screw-threadable device with a syphon pipe which is mountable on the container. The device further comprises a handle-operated valve for discharging the carbonated beverage, and a cartridge compartment with tightening means for placing the cartridge and pressing same against either a counter-surface which is effective to open the valve by pushing its stem thereinto, or a piercing needle for bursting the metal foil closure of the valve --as the case may be.

More recently, appliances known world-wide under the trade name "SODASTREAM" have enjoyed considerable commercial success. These devices use larger cartridges, of capacity sufficient for the preparation, one-at-a-time of, say, 50 to 100 cups of carbonated liquid, by operating a lever. Every manipulation of the lever releases a fixed quantity of pressurized CO2 gas.

Obviously, home preparation of carbonated beverages according to the conventional methods involved the purchase of a special device and, either performing the routine of filling the container, closing the head device thereof and manipulating the cartridge into its charging state, or operating the "SODASTREAM" device lever etc., as above-described.

It is therefore the general object of the invention to provide means for the purposes in question that will make redundant the use of a specially-designed and costly appliance.

It is a further object of the invention to facilitate the preparation of carbonated beverages within practically any container, without recourse to any auxiliary means or devices.

It is a still further object of the invention to provide a cartridge for use in the self-making of carbonated beverages readily applied to ordinary, family-size screw-threaded capped bottles.

The invention thus provides for pressurized CO2 gas cartridge characterized by a seal at least partly comprised of a compact maceratable material.

The maceratable material may be a water-soluble, -absorbent or -disintegrable substance, such as gelatine, starch, sugar; fibrous or cellular materials such as paper, rice-paper, cardboard, felt, acrylics; or chemicals that react with water, such as Sodium (Na) or Calcium (Ca); all of which being readily softened when soaked or even wetted by liquid.

The cartridge seal may take various forms such as a solid, suitably shaped valve member that will deform upon contact with water, may be constituted by a gasket, similar to an "O" ring, or many other possibilities and versions, all at the designer's option.

These and further constructional details and advantages of the invention will become more clearly understood in the light of the ensuing description of a few preferred embodiments thereof, given by way of example only, with reference to the accompanying drawings, wherein --

Fig. 1a is a cross-sectional view of a cartridge provided with a seal according to a first embodiment of the invention;

Fig. 1b illustrates an alternative shape of a valve body suitable for use in the cartridge of Fig. 1a;

Fig. 2a is a fragmental view of a cartridge seal according to another embodiment of the invention;

Fig. 2b shows the seal of Fig. 2a in its closed state;

Fig. 3a is another embodiment of a cartridge seal;

Fig. 3b shows the seal of Fig. 3a in its closed state;

Fig. 4a is a still further embodiment of a cartridge seal according to the present invention in its filling state;

Fig. 4b shows the seal of Fig. 4a in its closed state;

Fig. 5a shows a modified form of the valve member applicable to the embodiment of Figs. 4a and 4b;

Fig. 5b is a top view of the valve member of Fig. 5a;

Fig. 6 is a still further embodiment of a cartridge seal;

Fig. 7 is a still further embodiment of a cartridge seal;

Fig. 8 shows an ordinary beverage bottle with its screw-threaded cap;

Fig. 9 shows a cartridge provided with a flange for use in conjunction with the bottle of Fig. 8; and

Fig. 10 illustrates the method of using the bottle of Fig. 8 and the cartridge of Fig. 9 in the preparation of a carbonated beverage.

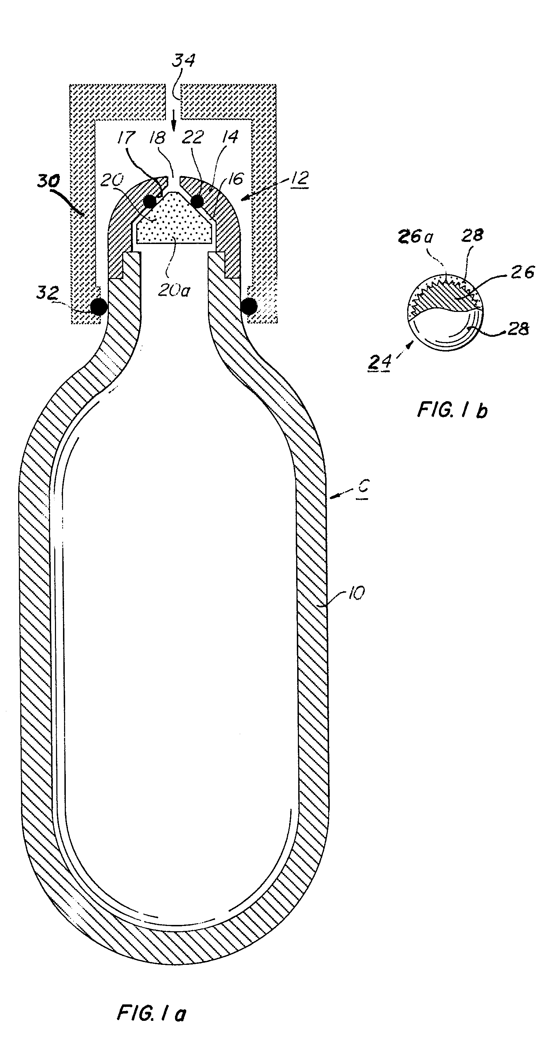

In Fig. 1a there is shown a cartridge C made of metal or plastic material which generally resembles the appearance of the conventional one-time or disposable CO2 cartridges as above-described.

Thus, the cartridge is generally bottle- or bullet-shaped, having a body portion 10 and a head portion generally denoted 12. A valve seat member 14 is hermetically affixed to the cartridge, e.g. by press-fitting, cementing, soldering and the like. The valve seat member 14 defines an inner valve chamber or space 16 with valve seat portion 17 and opening 18. A cone-shaped valve member 20 is provided, freely accommodated within the chamber 16, with a base 20a of sufficient size to prevent the fall of the valve member 20 into the cartridge body 10.

If necessary an "O" ring 22 is provided to assure hermetic sealing of the valve member 20 against the valve seat. According to the unique feature of the invention, the valve member 20 is made of a maceratable substance, i.e. material which, when soaked in a liquid will lose its compact or rigid state, and become softened or disintegrated.

Preferred examples of such substances are gelatine, starch; organic or inorganic chemical compounds such as sugar or salt; compact fibrous materials such as felt; or cellular or fibrous materials such as paper.

Alternatively, other possible shapes of valve member may be used, such as sphere 24 shown in Fig. 1b. It may be comprised of an inner core 26, e.g. a metal or plastic ball, preferably with a roughened outer surface 26a which is then coated by a layer 28 of any suitable one of the maceratable materials.

As schematically shown in broken lines in Fig. 1a, filling a cartridge with pressurized $CO_2$ gas will be effected in substantially the same manner as with the conventional cartridges, namely: Head 30 of a filling installation (not shown), provided with gasket ring 32 and supply conduit 34, is placed around the throat portion of the cartridge C, and a fixed quantity of gas is charged into the cartridge. Once released from the filling station, the valve member 20 (or 24) will automatically close the valve-discharge opening 18 for as long as the cartridge is not put into use in the manner to be described below.

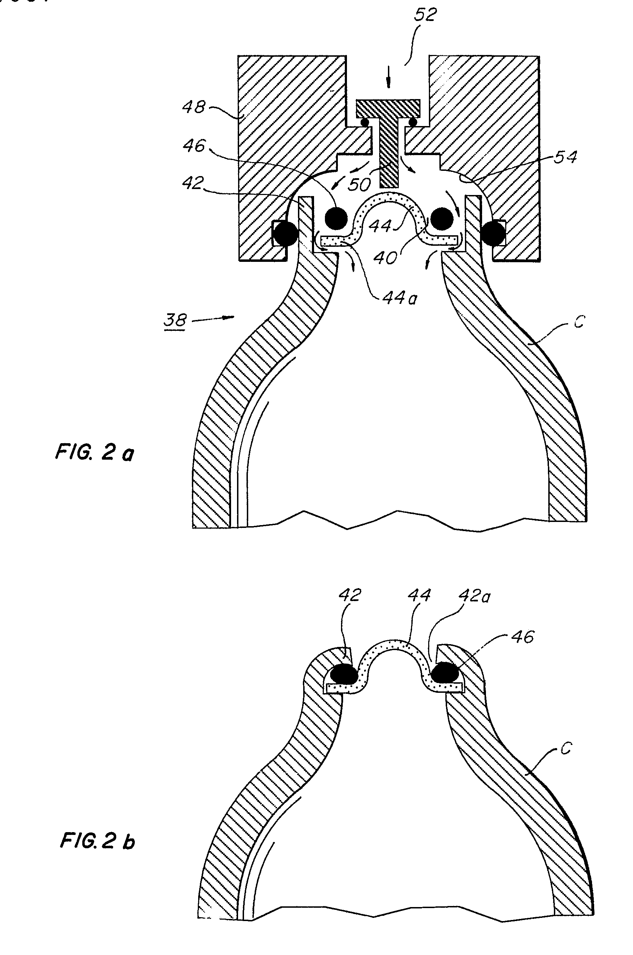

With reference now to Figs. 2a and 2b, there is shown a cartridge head portion 38 formed with a cavity 40 defined inside a circular upright shoulder or rim 42. Within the cavity 40 there is placed a dome-shaped cap member 44, which is made of any of the maceratable substances. The cap member 44 has an outward radiating flange 44a, on top of which there is placed, within the cavity 40, a resilient gasket, such as in the form of an "O" ring 46. A filling-machine head 48 is partly shown, which may be of the type including a stem-valve member 50 controlling the release of the pressurized gas from charging conduit 52. When the filling machine head is lowered to the position somewhat below that shown in Fig. 2a, pressurized gas will be charged into the cartridge C (as denoted by arrows) until the required pressure is attained. Further lowering of the head (or raising of the cartridge) will cause the cold-rolling or crimping of the rim 42 by cam surface 54 of the head 48. The result of this rolling or crimping operation is shown in Fig. 2b, where the "O" ring 46 seals the cartridge against escape of the gas.

The cartridge is now ready for use according to the teachings of the present invention.

It should be noted at this stage -- and further developed later on -- that the sealing member represented by the "O" ring 46 may be prepared from the maceratable material proper, while the cap member 44 be of an ordinary material (e.g. plastic). In that case, a gap 42a must be maintained, exposing the ring 46 to contact with the liquid. The operational result will be the same.

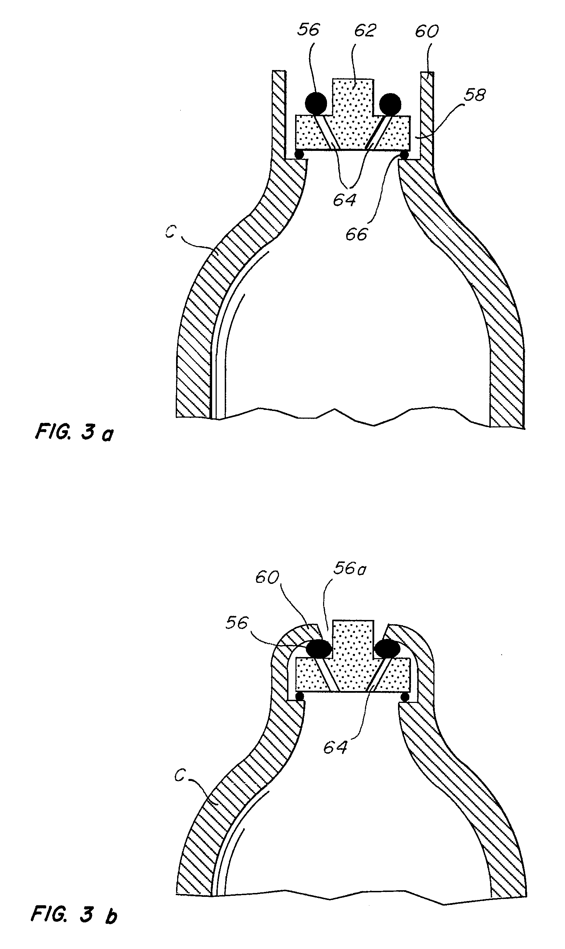

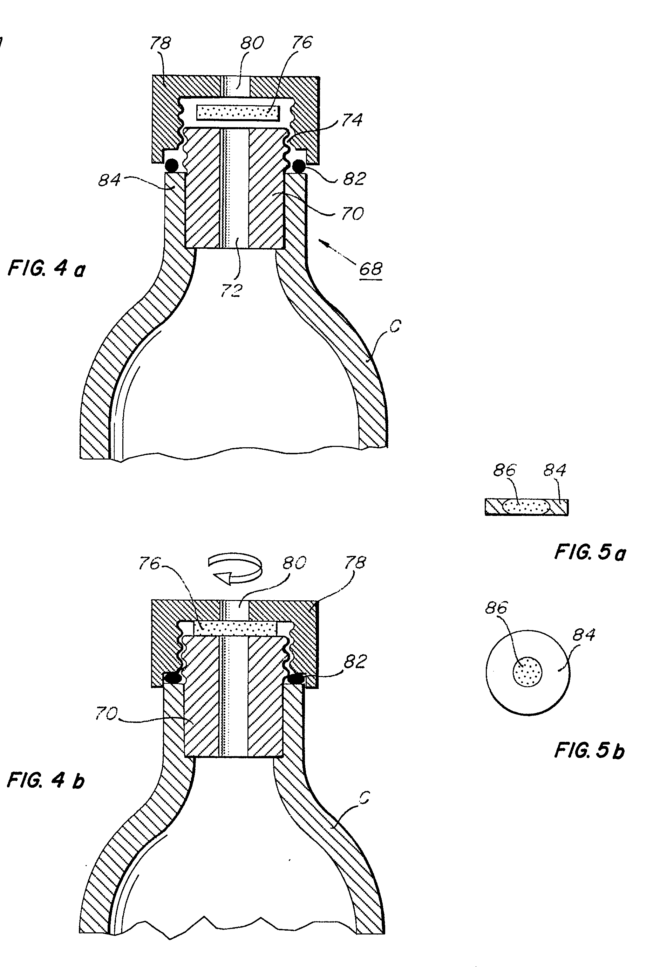

In Figs. 3a and 3b, a ring-type seal 56 is shown, made of a maceratable substance as herein defined. It is seated within a cavity 58 similar to the cavity 40 of the preceding embodiment. Circular rim 60 surrounds a cap member 62 made of any suitable material, which is preferably provided with passages 64 and a sealing ring 66 at its base. Fig. 3a represents the filling stage of the cartridge, as already described above, while in Fig. 3b the upright rim 60 has already been deformed to close-on the seal 56. However, as already mentioned, a gap marked 56a is left for the access of liquid when the cartridge is put into use, namely, submerged in the beverage which is to be carbonated. Obviously, upon becoming even slightly moistened, the ring 56 will soften and cease to serve as a seal, and will allow the gas to penetrate through the passages 64 and 56a and admix with the surrounding liquid. According to the embodiment of Figs. 4a and 4b, cartridge C with heat portion 68 is closed by a bushing 70, having a throughgoing bore 72. Bushing 70 is provided with a screw-thread 74 at its upper section. Disc 76, wholly or partly made of a maceratable material, is placed on top of the bushing 70. Screw-threaded cap 78, with opening 80, is partly threaded over the bushing 70.

"O" ring seal 82 is placed on rim 84 of the cartridge head, as shown.

Fig. 4a represents the filling position, whereby pressurized gas can flow through the opening 80, around the disc 76, and through the passage 72 into the cartridge C. At the end of this stage, and while still under the filling pressure, the cap 78 is rotated by any suitable means (not shown) to close against both the disc 76 and the seal 82, as shown in Fig. 4b, thus completing preparation of the cartridge for its designated use.

As clearly illustrated in Figs. 5a and 5b, the disc, denoted 84, may be only partly made of the maceratable material, i.e. comprising at its center a tiny filling or core 86 of such material, cast or otherwise set into a suitable opening prepared in the disc 84.

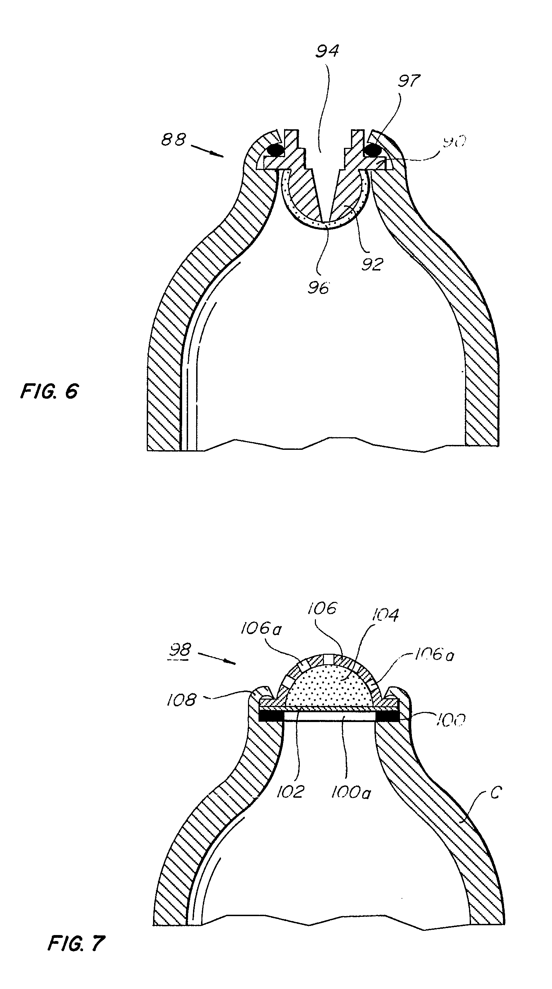

Fig. 6 illustrates the application of the maceratable material in the form of a coating layer -- rather than as a separate, discrete object. Hence, cartridge C is provided with a cap member 88 having a flanged shoulder 90, a rounded head 92, and a throughgoing bore 94.

A layer 96 of a maceratable substance surrounds the head 92, which layer is conveniently attained by dipping the head in a bath of, say, gelatine (in liquid form).

The filling of the cartridge is completed in the manner described above (see Figs. 2b or 3b) by bending the lip of the cartridge over an "O" ring 97.

A further method of utilizing the basic principle of the present invention is illustrated in Fig. 7. Cap assembly 98 comprises a soft or resilient washer 100 with a central opening 100a. A coin-like disc 102, e.g. made of aluminum foil, covers the washer 100. A filler 104 of fine granular maceratable material in bulk form, such as sugar crystals, is placed above the disc 102. The mechanical force required to resist the internal pressure, and prevent the foil from bursting, is provided by a cap 106, having perforations 106a holding the bulk material thereagainst.

The assembly 98 is placed onto the cartridge and sealed immediatly after filling, as by bending-over rim 108. The method of using cartridges C will now be exemplified.

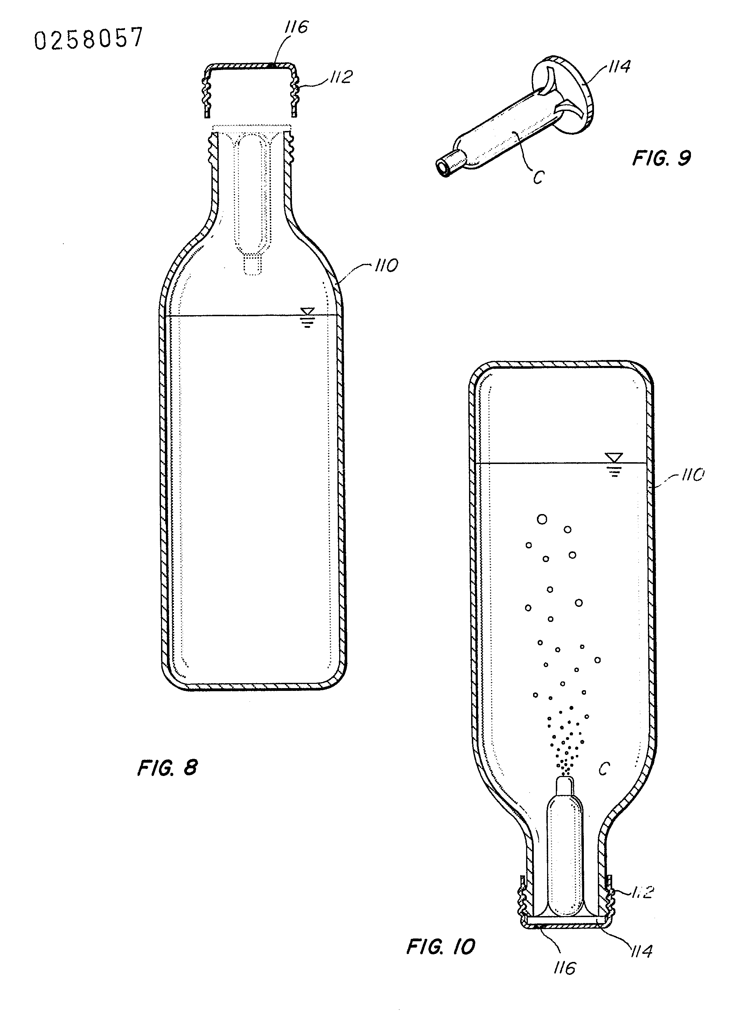

Fig. 8 illustrates an ordinary, family-size beverage bottle 100 with screw-on cap 112, all of conventional design. It is advisable, for more convenient use of the cartridges C proposed according to the invention, to equip each cartridge with a base flange member 114 (Fig. 9) which may be of plastic, applied by pressure of cementing to the bottom of the cartridge. The flange 114 is circular, of a diameter corresponding to the mouth diameter of the bottle 110. Thus, the cartridge can be suspended from the bottle mouth and held in position by the cap 112, without affecting the sealing capability thereof.

As clearly shown in Fig. 10, all that is required is to inset the cartridge C in an upside-down position into the mouth or the throat of the bottle 110, to close the cap 112, and hold the bottle upside down for a period of time sufficient to moisten the maceratable substance until it softens and fulfills its function.

For safety reasons it may be advisable to provide a weakening incision 116, just in case the internal pressure within the bottle 110 exceeds a safe range. For that purpose, it is advisable that the cartridges C to be supplied to the consumer with a cap, such as the cap 112, attached to the bottom of every cartridge, instead of to the base rim member 114.

It has been thus established that the invention provides an extremely convenient and useful method for the domestic preparation of soda water or other carbonated beverage. All that one needs is a supply of the novel cartridge, which may be refillable or -- particularly if made of plastic --disposable. No expensive devices to purchase; no operating instructions to study and comply with; no preparatory stages to follow. In short -- minimal effort, and minimal expense.

Experimental tests have proved that when gelatine in hard film form is used as the maceratable substance in a cartridge constructed according to the embodiment of Fig. 4b, release of the CO2 gas starts gradually after about 30 seconds, and is complete in 1 minute.

It is of course easy to control and predetermine the optimal time by properly selecting the maceratable substance out of a wide range of possibilities, with regard to quantity, grade of compactness, and other factors. Those skilled in the art to which this invention pertains will readily appreciate its outstanding advantages, and that various changes, modifications and variations, may be applied to the exemplified embodiments thereof without departing from its scope as defined in and by the appended claims.

## Claims

1. For use in domestic preparation of carbonated beverages, a pressurized CO2 gas cartridge characterized by a seal at least partly comprised of a compact maceratable substance.

2. The cartridge as claimed in Claim 1 wherein the substance is water-soluble.

The cartridge as claimed in Claim 1 wherein the substance is water-absorbent.

4. The cartridge as claimed in Claim 1 wherein the substance is water-disintegrable.

5. The cartridge as claimed in Claim 1 wherein the cartridge comprises a shell-like body and a head-portion incorporating the said seal.

6. The cartridge as claimed in Claim 5 wherein the seal comprises a valve seat defining a valve chamber with an opening, communicating the interior of the cartridge with the outside thereof, and a valve member made of the said maceratable substance, received within the valve chamber, adapted to seal the opening against escape of the pressurized gas.

7. The cartridge as claimed in Claim 6 wherein the valve member is loosely received within the valve chamber to allow filling of the cartridge through the said opening.

8. The cartridge as claimed in Claim 7 wherein the valve chamber is defined within a cap member affixed to the head portion of the cartridge.

9. The cartridge as claimed in Claim 8 wherein the valve member is cone-shaped.

10. The cartridge as claimed in Claim 8 wherein the valve member is spherical.

11. The cartridge as claimed in Claims 9 or 10 wherein the valve member comprises an inner core and an outer coating made of the said maceratable substance.

12. The cartridge as claimed in Claim 5 wherein the seal comprises a cap member made of the said maceratable substance, seated within a cavity formed in the said head portion, a resilient gasket being provided clamped between a peripheral portion of the cap and a bent-over lip defining a wall surrounding the said cavity.

13. The cartridge as claimed in Claim 12 wherein the cap member is dome-shaped.

14. The cartridge as claimed in Claim 5 wherein the seal comprises a cap member seated within a cavity formed in the said head portion, a gasket made of the said maceratable substance being provided clamped between a peripheral portion of the cap and a bent-over lip defining a wall surrounding the said cavity.

15. The cartridge as claimed in Claim 14 wherein the cap member is provided with passages for filling and discharge of the gas therethrough.

16. The cartridge as claimed in Claim 5 wherein the seal comprises a disc at least partly made of the said maceratable substance which is clamped between a bushing affixed to the said head portion and a screw-threaded cover member, which member is adapted to be tightened against the bushing after filling of the cartridge.

17. The cartridge as claimed in Claim 5 wherein the seal comprises a head portion with a throughgoing bore, wholly coated by a layer of the said maceratable substance.

18. The cartridge as claimed in Claim 5 wherein the seal comprises foil, reinforced against burst thereof under the said pressure by a body of the said maceratable substance in bulk form placed on th foil and held by a perforated cover member.

19. A process of domestic preparation of carbonated beverages comprising the steps of -

    (a) filling a container with the beverage to be carbonated;

    (b) inserting into the container a pressurized $CO_2$ gas cartridge provided with a seal at least partly comprised of maceratable substance; and

    (c) closing the container for a period of time sufficient for the substance to become softened, thereby allowing release of the gas from the cartridge.

20. The process as claimed in Claim 19 wherein the container is a bottle, having an open rim throat portion and threadable stopper, the cartridge being provided with a flange fitting on said rim while the stopper is closed and the cartridge suspended inside the throat portion of the bottle.

0258057

FIG. 1 a

FIG. 1 b

0258057

FIG. 2 a

FIG. 2 b

0258057

FIG. 3 a

FIG. 3 b

0258057

FIG. 4 a

FIG. 4 b

FIG. 5 a

FIG. 5 b

0258057

FIG. 6

FIG. 7

0258057

FIG. 8

FIG. 9

FIG. 10